# FASCICULE DE BREVET EUROPEEN

(11) **EP 2 417 698 B1**
(45) Date de publication et mention de la délivrance du brevet: **06.07.2016**
(21) Numéro de dépôt: 10710057.0
(22) Date de dépôt: 25.03.2010
(51) Int. Cl.: H02M 5/458, H02J 1/10, H02J 3/38, H02M 7/48, H02J 7/35

(54) **SYSTÈME DE COMMANDE D'UNE CHARGE ÉLECTRIQUE ALIMENTÉ PAR DES SOURCES CONTINUES**
SYSTEM ZUM STEUERN EINER ELEKTRISCHEN LADUNG, VERSORGT DURCH GLEICHSTROMQUELLEN
SYSTEM FOR CONTROLLING AN ELECTRIC CHARGE POWERED BY DC SOURCES

(30) Priorité: 08.04.2009 FR 0952280
(43) Date de publication de la demande: 15.02.2012
(73) Titulaire: Schneider Toshiba Inverter Europe SAS, 27120 Pacy sur Eure (FR)
(72) Inventeur: LOIZELET, Philippe, F-27120 Le Plessis Hebert (FR)
(74) Mandataire: Dufresne, Thierry
(86) Numéro de dépôt international: PCT/EP2010/053931
(87) Numéro de publication internationale: WO 2010/115725

(56) Documents cités:
- EP-A- 1 986 306
- WO-A-2006/050878

## Description

La présente invention se rapporte à un système de commande d'une charge électrique alternative, tel qu'un moteur électrique triphasé, le système de commande comportant un variateur de vitesse et étant alimenté par plusieurs sources d'alimentations continues, telles que des cellules photovoltaïques.

Un variateur de vitesse de type convertisseur de fréquence est destiné à piloter un moteur alternatif. Il comporte habituellement un module onduleur qui est alimenté par une tension continue délivrée par un bus de puissance et qui délivre une tension alternative de fréquence variable aux enroulements du stator du moteur. Le module onduleur comporte des interrupteurs de puissance commandés pour effectuer une modulation de tension à largeur d'impulsions (MLI ou PWM - Pulse Width Modulation). La tension continue du bus de puissance est habituellement fournie par un module redresseur qui est alimenté par une tension d'alimentation alternative provenant d'un réseau d'alimentation extérieur et qui délivre en sortie une tension redressée formant le bus de puissance. Le module redresseur comporte des ponts de diodes ou de thyristors pour redresser la tension d'alimentation alternative.

Il se trouve que, dans certaines applications, le réseau d'alimentation extérieur alimentant le variateur de vitesse ne fournit pas une tension alternative mais une tension continue. Ce cas se produit notamment lorsque la source d'énergie est photovoltaïques ou électrochimique. Dans ce cas, si l'on veut utiliser un variateur de vitesse classique, il faut rajouter un module convertisseur permettant de passer de la tension continue provenant du réseau d'alimentation à une tension alternative alimentant le variateur de vitesse. Cette situation complique évidemment la solution de façon importante.

Une autre solution consiste à se servir directement de la tension continue d'alimentation comme bus de puissance alimentant le module onduleur du variateur. Cette solution plus simple présente néanmoins l'inconvénient que le variateur de vitesse qui est utilisé dans ce cas n'est pas un variateur standard, ce qui peut être pénalisant en termes de coût pour de petites installations. Une telle solution est par exemple présentée dans le document US7, 126, 294 ou EP 1 986 306 qui montre une cellule photovoltaïque dont les bornes de sortie sont connectées au bus de puissance alimentant le module onduleur d'un variateur de vitesse. De plus, cette solution ne permet pas de gérer simplement le cas où le réseau d'alimentation extérieur comporte plusieurs sources d'alimentation continues en parallèle.

En effet, certaines sources d'énergie, comme les cellules photovoltaïques, n'ayant pas un fonctionnement constant puisqu'il dépend de l'ensoleillement reçu par la cellule, il peut donc être souhaitable de disposer de plusieurs sources d'alimentation en parallèle pour une meilleure disponibilité de l'installation.

Le document WO 2006/050878 décrit un variateur de vitesse qui peut être alimenté par un module d'alimentation comportant plusieurs sources discontinues, telles que des cellules photovoltaïques, où le module d'alimentation est directement raccordé aux bornes d'entrée du redresseur du variateur.

Le but de l'invention est donc de proposer une solution simple et économique qui permette d'alimenter un variateur de vitesse standard par plusieurs sources d'alimentations continues, sans ajouter de composants supplémentaires et sans nécessiter de modification du variateur, dans le but de commander un moteur électrique.

Pour cela, l'invention décrit un système de commande d'une charge électrique alternative, comportant un variateur de vitesse qui comprend un module redresseur muni de plusieurs bornes d'alimentation et fournissant une tension continue entre une ligne positive et une ligne négative d'un bus de puissance, et qui comprend un module onduleur alimenté par le bus de puissance et fournissant une tension variable à la charge électrique alternative.

Selon une variante A, le système de commande comporte plusieurs sources d'alimentations continues qui comprennent chacune une borne positive et une borne négative, la borne positive de chaque source d'alimentation continue étant raccordée à une borne d'alimentation distincte du module redresseur et les bornes négatives des sources d'alimentations continues étant raccordées à la ligne négative du bus de puissance. Selon une variante B équivalente, le système de commande comporte plusieurs sources d'alimentations continues qui comprennent chacune une borne positive et une borne négative, la borne négative de chaque source d'alimentation continue étant raccordée à une borne d'alimentation distincte du module redresseur et les bornes positives des sources d'alimentations continues étant raccordées à la ligne positive du bus de puissance

Selon une caractéristique, le module redresseur comporte plusieurs branches parallèles reliées entre la ligne positive et la ligne négative du bus de puissance, chaque branche comprenant deux diodes en série, chaque borne d'alimentation du variateur étant reliée respectivement à un point milieu entre les diodes du module redresseur.

D'autres caractéristiques et avantages vont apparaître dans la description détaillée qui suit en se référant à un mode de réalisation donné à titre d'exemple et représenté par les dessins annexés sur lesquels :
- la figure 1 montre une architecture simplifiée d'un système de commande conforme à la variante A de l'invention,
- la figure 2 montre une architecture simplifiée d'un système de commande conforme à la variante B de l'invention,
- la figure 3 représente un autre mode de réalisation de la figure 1.

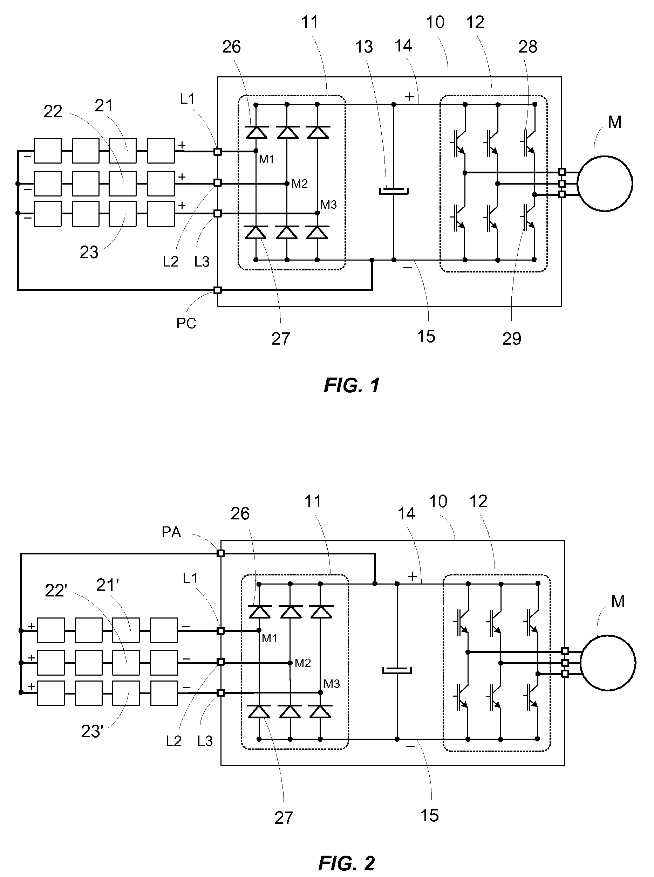

En référence à la figure 1, un système de commande est destiné à piloter une charge électrique, en l'occurrence un moteur électrique triphasé M. Le système de commande comporte un variateur de vitesse 10, de type convertisseur de fréquence, qui délivre une tension alternative de fréquence variable au moteur à l'aide d'un module onduleur 12 comportant trois branches munies chacune de deux interrupteurs de puissance 28,29 en série. Ces interrupteurs de puissance sont par exemple des IGBT (Insulated Gate Bipolar Transistor), des transistors de puissance à effet de champ (FET) ou autres et sont pilotés par une unité de commande du variateur 10 (non représentée). Les branches du module onduleur 12 sont alimentées par un bus de puissance présentant une tension continue entre une ligne positive 14 et une ligne négative 15.

En amont du module onduleur 12, le variateur de vitesse 10 comprend également un module redresseur 11 qui délivre une tension continue entre la ligne positive 14 et la ligne négative 15 du bus de puissance. Un condensateur de bus 13 est généralement placé entre le module redresseur 11 et le module onduleur 12 et est raccordé entre la ligne positive 14 et la ligne négative 15.

D'habitude, le module redresseur 11 d'un variateur de vitesse 10 est alimenté par un réseau d'alimentation extérieur qui fournit généralement une tension alternative qui peut être monophasée ou triphasée, en fonction des applications. Le module redresseur 11 comporte plusieurs branches parallèles, chaque branche étant composée de deux diodes 26,27 en série et étant raccordée entre la ligne positive 14 et la ligne négative 15 du bus de puissance. Le point milieu entre les diodes 26 et 27 de chaque branche du module redresseur 11 est dénommé M1, M2, M3. Les diodes supérieures 26 ont leur cathode qui est reliée du côté de la ligne positive 14 et leur anode qui est reliée à un point milieu. Les diodes inférieures 27 ont leur anode qui est reliée du côté de la ligne négative 15 et leur cathode qui est reliée à un point milieu. Les diodes 26, 27 peuvent être remplacées par d'autres composants interrupteurs tels que des thyristors notamment. Le nombre de branches du module redresseur 11 dépend du nombre de phases de la tension alternative d'alimentation du réseau extérieur.

Dans le cas d'un variateur 10 destiné à être alimenté par une tension alternative triphasée, le module redresseur 11 comporte trois branches parallèles et comporte trois bornes d'alimentation alternatives L1, L2, L3, chaque borne d'alimentation alternative étant destinée à être raccordée à l'une des trois phases de la tension d'alimentation triphasée. Les trois bornes d'alimentation L1, L2, L3 sont reliées respectivement à un point milieu M1, M2, M3 entre les diodes 26 et 27 de chaque branche du module redresseur 11, comme indiqué en figure 1.

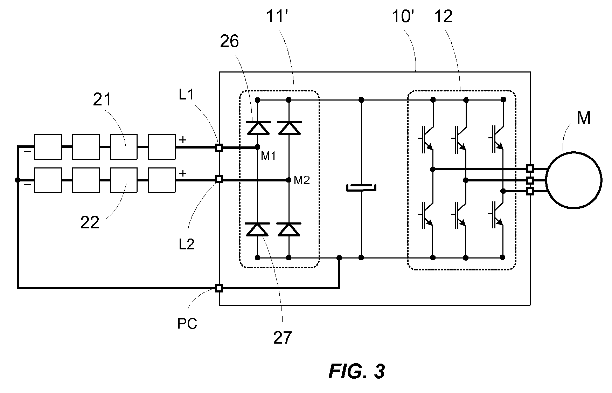

Dans le cas d'un variateur 10' destiné à être alimenté par une tension alternative monophasée, le module redresseur 11' comporte seulement deux branches parallèles et comporte deux bornes d'alimentation alternatives L1, L2, chaque borne d'alimentation alternative étant destinée à être raccordée à l'une des deux phases (ou phase - neutre) de la tension d'alimentation. Les deux bornes d'alimentation L1, L2 sont reliées respectivement à un point milieu M1, M2 entre les diodes 26 et 27 de chaque branche du module redresseur 11', comme indiqué en figure 3.

L'invention a pour but de fournir une solution simple et économique pour les applications où un variateur de vitesse standard est alimenté non pas par une tension d'alimentation alternative monophasée ou triphasée, mais par plusieurs sources d'alimentation continues, composées par exemple de plusieurs cellules photovoltaïques ou panneaux solaires.

Le système de commande représenté dans les figures 1 et 2 comporte ainsi trois sources d'alimentations continues 21,22,23 ou 21',22',23' destinées à alimenter le variateur 10. Chaque source d'alimentation continue comporte une borne positive et une borne négative et est composée d'une ou plusieurs cellules photovoltaïques reliées en série les unes aux autres, dans le but de fournir un niveau de tension suffisant au bus de puissance du variateur 10. Dans les exemples des figures 1 et 2, chaque source d'alimentation est composée de quatre cellules reliées en série.

L'inconvénient est que si une cellule photovoitaïque d'une source d'alimentation est ombragée ou défaillante, alors c'est toute la source d'alimentation qui perd sa puissance car la cellule ombragée ou défaillante aura une production limitée en courant. Donc, il semble important de mettre plusieurs sources d'alimentation en parallèle. Mais chaque source d'alimentation doit alors être indépendante, car si une première source d'alimentation ne fournit pas le courant désiré, une seconde source d'alimentation risque de débiter le courant dans la première source d'alimentation, qui va alors consommer inutilement (comme pour un court-circuit). Il est donc nécessaire de prévoir un dispositif anti-retour entre les différentes sources d'alimentation.

C'est pourquoi l'invention prévoit que, selon une première variante A représentée en figure 1, la borne positive de chaque source d'alimentation continue 21, 22, 23 est respectivement raccordée à une borne d'alimentation L1, L2, L3 correspondante du module redresseur 11. Les bornes négatives des sources d'alimentations 21, 22, 23 sont toutes raccordées en commun à une borne de commun qui est directement reliée à la ligne négative 15 du bus de puissance, appelée aussi borne PC. Cette borne PC est une borne existante qui est disponible dans les variateurs de vitesse standards et il est donc très facile de l'utiliser.

Ainsi, les trois bornes d'alimentation L1, L2, L3 ne sont pas raccordées aux différentes phases d'une source d'alimentation alternative comme dans le cas d'une utilisation habituelle du variateur 10, mais sont directement raccordées la borne positive de chacune des trois sources d'alimentation continues, sans effectuer une quelconque modification du variateur 10, les bornes négatives des sources d'alimentation continues étant reliées ensemble à la ligne négative 15 du bus de puissance.

Les bornes positives des sources d'alimentation 21, 22, 23 étant respectivement raccordées aux points milieu M1, M2, M3 des branches du module redresseur 11, elle sont donc reliées à la ligne positive 14 du bus de puissance via les diodes supérieures 26 de chaque branche du module redresseur 11. Ainsi, en cas de défaillance d'une quelconque source d'alimentation 21, 22, 23, les diodes supérieures 26 de chaque branche du module redresseur 11 évitent un rebouclage et une mise en court-circuit de cette source d'alimentation défaillante (fonction anti-retour).

Dans une seconde variante B présentée en figure 2 et dont le fonctionnement est équivalent à la variante A, le système de commande comporte trois sources d'alimentation continue 21', 22', 23' similaires respectivement aux sources 21, 22, 23 de la figure 1 mais branchées différemment. En effet, c'est désormais la borne négative de chaque source d'alimentation continue 21', 22', 23' qui est respectivement raccordée à une borne d'alimentation L1, L2, L3 correspondante du module redresseur 11. Les bornes positives des sources d'alimentations 21', 22', 23' sont alors toutes raccordées en commun à une borne de commun qui est directement reliée à la ligne positive 14 du bus de puissance, appelée aussi borne PA. Cette borne PA est une borne existante qui est disponible dans les variateurs de vitesse standards.

Ainsi, les trois bornes d'alimentation L1, L2, L3 ne sont pas raccordées aux différentes phases d'une source d'alimentation alternative comme dans le cas d'une utilisation habituelle du variateur 10, mais sont directement raccordées à la borne négative de chacune des trois sources d'alimentation continues, sans effectuer une quelconque modification du variateur 10, les bornes positives des sources d'alimentation continues étant reliées ensemble à la ligne positive 14 du bus de puissance.

Les bornes négatives des sources d'alimentation 21', 22', 23' étant respectivement raccordées aux points milieu M1, M2, M3 des branches du module redresseur 11, elle sont donc reliées à la ligne négative 15 du bus de puissance via les diodes inférieures 27 de chaque branche du module redresseur 11. Ainsi, en cas de défaillance d'une quelconque source d'alimentation 21', 22', 23', les diodes inférieures 27 de chaque branche du module redresseur 11 évitent un rebouclage et une mise en court-circuit de cette source d'alimentation défaillante.

Les deux variantes A et B sont utilisables avec un même variateur 10 car les bornes PA et PC sont toutes les deux disponibles dans un variateur standard. Dans les deux variantes A et B, on bénéficie donc de la structure standard du module redresseur 11, en particulier de l'existence des diodes supérieures 26 (variante A) et des diodes inférieures 27 (variante B), pour éviter un dysfonctionnement en cas de défaillance d'une source d'alimentation. Cette solution simple permet donc d'alimenter un variateur de vitesse standard à partir de plusieurs sources d'alimentation continues, sans les inconvénients cités et sans nécessiter de rajouter des composants pour isoler les différentes sources d'alimentation continues. Ces deux variantes appartiennent à la même invention puisqu'elles résolvent le même problème technique en utilisant des moyens techniques identiques, la seule différence provenant du sens de raccordement des sources d'alimentation au variateur 10.

Dans le cas des figures 1 et 2, le variateur 10 est un variateur triphasé qui comporte trois bornes d'alimentation L1, L2, L3 reliées respectivement au point milieu M1, M2, M3 des trois branches du module redresseur 11, et le système de commande comporte trois sources d'alimentations continues 21, 22, 23 ou 21', 22', 23' reliées respectivement aux trois bornes d'alimentation.

Dans le cas de la figure 3, le variateur 10' est un variateur monophasé qui comporte donc seulement deux bornes d'alimentation L1, L2 reliées respectivement au point milieu M1, M2 des deux branches du module redresseur 11', et le système de commande comporte deux sources d'alimentations continues 21, 22, dont les bornes positives sont reliées respectivement aux deux bornes d'alimentation. La figure 3 s'apparente à la variante A de la figure 1, c'est-à-dire avec un raccordement commun à la ligne négative 15 du bus puissance, mais il est évident que l'on pourrait également transposer le cas de la figure 3 à la variante B de la figure 2, c'est-à-dire avec un raccordement commun à la ligne positive 14 du bus puissance.

Dans un autre mode de réalisation non représenté, il serait également possible d'alimenter un variateur triphasé avec seulement deux sources d'alimentations continues 21,22. Dans ce cas, il suffit de raccorder les sources d'alimentations continues 21, 22 à deux quelconques parmi les trois bornes d'alimentation L1, L2, L3, par exemple L1, L2, et de ne pas raccorder la borne d'alimentation L3 correspondant à la troisième branche du module redresseur 11.

## Revendications

1. Système de commande d'une charge électrique alternative, comportant un variateur de vitesse (10) qui comprend un module redresseur (11) muni de plusieurs bornes d'alimentation (L1,L2,L3) et fournissant une tension continue entre une ligne positive (14) et une ligne négative (15) d'un bus de puissance, et qui comprend un module onduleur (12) alimenté par le bus de puissance et fournissant une tension variable à la charge électrique (M), **caractérisé en ce que** le système de commande comporte plusieurs sources d'alimentations continues (21,22,23) qui comprennent chacune une borne positive et une borne négative, la borne positive de chaque source d'alimentation continue (21,22,23) étant raccordée à une borne d'alimentation (L1,L2,L3) distincte du module redresseur (11) et les bornes négatives des sources d'alimentations continues (21,22,23) étant raccordées à la ligne négative (15) du bus de puissance.

2. Système de commande d'une charge électrique alternative, comportant un variateur de vitesse (10) qui comprend un module redresseur (11) muni de plusieurs bornes d'alimentation (L1,L2,L3) et fournissant une tension continue entre une ligne positive (14) et une ligne négative (15) d'un bus de puissance, et qui comprend un module onduleur (12) alimenté par le bus de puissance et fournissant une tension variable à la charge électrique (M), **caractérisé en ce que** le système de commande comporte plusieurs sources d'alimentations continues (21',22',23') qui comprennent chacune une borne positive et une borne négative, la borne négative de chaque source d'alimentation continue (21',22',23') étant raccordée à une borne d'alimentation (L1,L2,L3) distincte du module redresseur (11) et les bornes positives des sources d'alimentations continues (21',22',23') étant raccordées à la ligne positive (14) du bus de puissance.

3. Système de commande selon la revendication 1 ou 2, **caractérisé en ce que** le module redresseur (11) comporte plusieurs branches parallèles reliées entre la ligne positive (14) et la ligne négative (15) du bus de puissance, chaque branche comprenant deux diodes (26,27) en série, chaque borne d'alimentation (L1,L2,L3) du variateur (10) étant reliée respectivement à un point milieu (M1,M2,M3) entre les diodes (26,27) du module redresseur (11).

4. Système de commande selon la revendication 1 ou 2, **caractérisé en ce que** chaque source d'alimentation continue comporte une ou plusieurs cellules photovoltaïques reliées en série.

5. Système de commande selon la revendication 1 ou 2, **caractérisé en ce que** le variateur (10) est un variateur triphasé qui comporte trois bornes d'alimentation (L1,L2,L3) et le système comporte trois sources d'alimentations continues reliées respectivement aux trois bornes d'alimentation.

6. Système de commande selon la revendication 1 ou 2, **caractérisé en ce que** le variateur (10') est un variateur monophasé qui comporte deux bornes d'alimentation (L1,L2) et le système comporte deux sources d'alimentations continues (21,22) reliées respectivement aux deux bornes d'alimentation.

7. Système de commande selon la revendication 1 ou 2, **caractérisé en ce que** le variateur est un variateur triphasé (10) qui comporte trois bornes d'alimentation (L1,L2,L3) et le système comporte deux sources d'alimentations continues (21,22) reliées respectivement à deux des trois bornes d'alimentation, la troisième borne d'alimentation n'étant pas raccordée.

## Patentansprüche

1. System zum Steuern einer elektrischen Wechsellast, das eine Drehzahlverstelleinrichtung (10) umfasst, die ein Gleichrichtermodul (11), das mit mehreren Versorgungsanschlüssen (L1, L2, L3) versehen ist und zwischen einer positiven Leitung (14) und einer negativen Leitung (15) eines Leistungsbusses eine Gleichspannung liefert, und ein Wechselrichtermodul (12), das von dem Leistungsbus versorgt wird und eine veränderliche Spannung an die elektrische Last (M) liefert, enthält, **dadurch gekennzeichnet, dass** das Steuersystem mehrere Gleichspannungsversorgungsquellen (21, 22, 23) umfasst, die jeweils einen positiven Anschluss und einen negativen Anschluss aufweisen, wobei der positive Anschluss jeder Gleichspannungsversorgungsquelle (21, 22, 23) mit einem anderen Versorgungsanschluss (L1, L2, L3) des Gleichrichtermoduls (11) verbunden ist und die negativen Anschlüsse der Gleichspannungsversorgungsquellen (21, 22, 23) mit der negativen Leitung (15) des Leistungsbusses verbunden sind.

2. System zum Steuern einer elektrischen Wechsellast, das eine Drehzahlverstelleinrichtung (10) umfasst, die ein Gleichrichtermodul (11), das mit mehreren Versorgungsanschlüssen (L1, L2, L3) versehen ist und zwischen einer positiven Leitung (14) und einer negativen Leitung (15) eines Leistungsbusses eine Gleichspannung liefert, und ein Wechselrichtermodul (12), das von dem Leistungsbus versorgt wird und an die elektrische Last (M) eine veränderliche Spannung liefert, enthält, **dadurch gekennzeichnet, dass** das Steuersystem mehrere Gleichspannungsversorgungsquellen (21', 22', 23') umfasst, die jeweils einen positiven Anschluss und einen negativen Anschluss aufweisen, wobei der negative Anschluss jeder Gleichspannungsversorgungsquelle (21', 22', 23') mit einem anderen Versorgungsanschluss (L1, L2, L3) des Gleichrichtermoduls (11) verbunden ist und die positiven Anschlüsse der Gleichspannungsversorgungsquellen (21', 22', 23') mit der positiven Leitung (14) des Leistungsbusses verbunden sind.

3. Steuersystem nach Anspruch 1 oder 2, **dadurch gekennzeichnet, dass** das Gleichrichtermodul (11) mehrere parallele Zweige umfasst, die zwischen die positive Leitung (14) und die negative Leitung (15) des Leistungsbusses geschaltet sind, wobei jeder Zweig zwei in Reihe geschaltete Dioden (26, 27) umfasst und wobei jeder Versorgungsanschluss (L1, L2, L3) der Verstelleinrichtung (10) mit einem jeweiligen Mittelpunkt (M1, M2, M3) zwischen den Dioden (26, 27) des Gleichrichtermoduls (11) verbunden ist.

4. Steuersystem nach Anspruch 1 oder 2, **dadurch gekennzeichnet, dass** jede Gleichspannungsversorgungsquelle eine oder mehrere in Reihe geschaltete photovoltaische Zellen umfasst.

5. Steuersystem nach Anspruch 1 oder 2, **dadurch gekennzeichnet, dass** die Verstelleinrichtung (10) eine dreiphasige Verstelleinrichtung ist, die drei Versorgungsanschlüsse (L1, L2, L3) umfasst, und das System drei Gleichspannungsversorgungsquellen umfasst, die entsprechend mit den drei Versorgungsanschlüssen verbunden sind.

6. Steuersystem nach Anspruch 1 oder 2, **dadurch gekennzeichnet, dass** die Verstelleinrichtung (10') eine einphasige Verstelleinrichtung ist, die zwei Versorgungsanschlüsse (L1, L2) umfasst, und das System zwei Gleichspannungsversorgungsquellen (21, 22) umfasst, die entsprechend mit zwei Versorgungsanschlüssen verbunden sind.

7. Steuersystem nach Anspruch 1 oder 2, **dadurch gekennzeichnet, dass** die Verstelleinrichtung eine dreiphasige Verstelleinrichtung (10) ist, die drei Versorgungsanschlüsse (L1, L2, L3) umfasst, und das System zwei Gleichspannungsversorgungsquellen (21, 22) umfasst, die entsprechend mit zwei der drei Versorgungsanschlüsse verbunden sind, wobei der dritte Versorgungsanschluss nicht verbunden ist.

## Claims

1. A system for controlling an AC electrical load, comprising a variable speed drive (10) which comprises a rectifier module (11) equipped with a plurality of supply terminals (L1, L2, L3) and delivering a DC voltage between a positive line (14) and a negative line (15) of a power bus, and which comprises an inverter module (12) supplied by the power bus and delivering a variable voltage to the electrical load (M), **characterized in that** the control system comprises several DC power supplies (21, 22, 23) which each comprise a positive terminal and a negative terminal, the positive terminal of each DC power supply (21, 22, 23) being connected to a separate supply terminal (L1, L2, L3) of the rectifier module (11) and the negative terminals of the DC power supplies (21, 22, 23) being connected to the negative line (15) of the power bus.

2. A system for controlling an AC electrical load, comprising a variable speed drive (10) which comprises a rectifier module (11) equipped with a plurality of supply terminals (L1, L2, L3) and delivering a DC voltage between a positive line (14) and a negative line (15) of a power bus, and which comprises an inverter module (12) supplied by the power bus and delivering a variable voltage to the electrical load (M), **characterized in that** the control system comprises several DC power supplies (21', 22', 23') which each comprise a positive terminal and a negative terminal, the negative terminal of each DC power supply (21', 22', 23') being connected to a separate supply terminal (L1, L2, L3) of the rectifier module (11) and the positive terminals of the DC power supplies (21', 22', 23') being connected to the positive line (14) of the power bus.

3. The control system as claimed in either of claims 1 and 2, **characterized in that** the rectifier module (11) comprises a plurality of parallel legs connected between the positive line (14) and the negative line (15) of the power bus, each leg comprising two diodes (26, 27) in series, each supply terminal (L1, L2, L3) of the variable speed drive (10) being respectively connected to a midpoint (M1, M2, M3) between the diodes (26, 27) of the rectifier module (11).

4. The control system as claimed in either of claims 1 and 2, **characterized in that** each DC power supply comprises one or more photovoltaic cells connected in series.

5. The control system as claimed in either of claims 1 and 2, **characterized in that** the variable speed drive (10) is a three-phase drive that comprises three supply terminals (L1, L2, L3) and the system comprises three DC power supplies connected respectively to the three supply terminals.

6. The control system as claimed in either of claims 1 and 2, **characterized in that** the variable speed drive (10') is a single-phase drive that comprises two supply terminals (L1, L2) and the system comprises two DC power supplies (21, 22) connected respectively to the two supply terminals.

7. The control system as claimed in either of claims 1 and 2, **characterized in that** the variable speed drive (10) is a three-phase drive that comprises three supply terminals (L1, L2, L3) and the system comprises two DC power supplies (21, 22) connected respectively to two of the three supply terminals, the third supply terminal not being connected.
